# EUROPÄISCHE PATENTSCHRIFT

(11) **EP 1 511 657 B1**
(45) Veröffentlichungstag und Bekanntmachung des Hinweises auf die Patenterteilung: **16.04.2008**
(21) Anmeldenummer: 03755071.2
(22) Anmeldetag: 13.02.2003
(51) Int. Cl.: B60R 21/01, B60N 2/00

(54) **FAHRZEUGSITZ UND STEUEREINHEIT**
VEHICLE SEAT AND CONTROL UNIT
SIEGE DE VEHICULE ET UNITE DE COMMANDE ASSOCIEE

(30) Priorität: 25.05.2002 DE 10223365
(43) Veröffentlichungstag der Anmeldung: 09.03.2005
(73) Patentinhaber: ROBERT BOSCH GMBH, 70442 Stuttgart (DE)
(72) Erfinder: MACK, Frank, 70376 Stuttgart (DE); LICH, Thomas, 71409 Schwaikheim (DE)
(86) Internationale Anmeldenummer: PCT/DE2003/000425
(87) Internationale Veröffentlichungsnummer: WO 2003/099617

(56) Entgegenhaltungen:
- WO-A-00/17615
- DE-A- 4 212 018
- DE-A- 19 856 129
- GB-A- 2 289 563
- US-A- 4 443 730

## Beschreibung

### Stand der Technik

Die Erfindung geht aus von einer Steuereinheit mit einem Sensor nach der Gattung der unabhängigen Patentansprüche.

Aus der DE 198 56 129 A1 ist ein Verfahren zur Ansteuerung von Sicherheitseinrichtungen in einem Kraftfahrzeug bekannt. Dabei werden abhängig von Sensor und/oder Bilderfassungssystemen anthropometrische Daten erfasst und eine entsprechende Auslösung von Sicherheitssystemen im Fall eines Crashes ermöglicht. Dabei können durch die erfassten Bilddaten beispielsweise schwangere Frauen erkannt werden. Aus der gattungsbildenden DE 42 12 018 A1 ist eine Insassenabfühlvorrichtung bekannt. Dabei kann ein dünner, piezoelektrisch ausgeführter Film in einem Fahrzeug angeordnet sein, wobei dann ein Kontaktglied auf diesem Film drückt und damit dessen elektrische Eigenschaften verändert. Eine elektrische Schaltung ist mit dem Film verbunden, um ein erstes Signal dann vorzusehen wenn der Film anzeigt, dass ein Insasse nicht vorhanden ist, während ein zweites Signal dann erzeugt wird, wenn ein Insasse vorhanden ist und schließlich wird ein drittes Signal dann erzeugt, wenn Film und Schaltung getrennt werden. Das Insassenrückhaltesystem wird dann in Bereitstellung gebracht, wenn entweder ein Insasse vorhanden oder ein elektrischer Fehlerzustand auftritt. Entsprechend einem Ausführungsbeispiel dieser Erfindung bestimmt eine Anordnung von im Sitz angeordneten Sensoren die Position und das Gewicht des Insassen und steuert den Einsatz des Insassenrückhaltesystems infolge der bestimmten Position und des Gewichts.

### Vorteile der Erfindung

Die erfindungsgemäße Steuereinheit mit einem Sensor hat den Vorteil, dass sie derart gestaltet sind, dass die Identifikation einer schwangeren Person ermöglicht wird. Dies wird insbesondere durch eine Integraltransformation eines Signals von dem Sensor möglich, die die Zuordnung von einem Atemvorgang zu einem Puls ermöglicht und somit, da ein ungeborenes Kind noch nicht atmet, zwei gemessene Pulse und nur eine Atmung bei einer Schwangeren offenbart. Handelt es sich um Zwillinge oder Drillinge erhöht sich die Anzahl der Pulse entsprechend, während nur ein Atemvorgang, nämlich der der schwangeren Frau, messbar ist. Dies ermöglicht die angepasste Ansteuerung von Rückhaltemitteln wie Gurtstraffern und Airbags, um so einen optimalen Schutz für eine schwangere Person zu gewährleisten, so dass dem ungeborenen Kind ein optimaler Schutz bei einem Unfall ermöglicht wird.

Durch die im abhängigen Anspruch aufgeführten Maßnahmen und Weiterbildungen sind vorteilhafte Verbesserungen der im unabhängigen Patentanspruch angegeben Steuereinheit möglich.

Ausführungsbeispiele der Erfindung sind in der Zeichnung dargestellt und werden in der nachfolgenden Beschreibung näher erläutert.

Es zeigen
- Figur 1: einen Fahrzeugsitz
- Figur 2: eine erfindungsgemäß Steuereinheit mit einem Sensor,
- Figur 3: ein Blockschaltbild der erfindungsgemäßen Steuereinheit mit einem Sensor und
- Figur 4: die Signale, die der Prozessor aufnimmt und wieder abgibt.

Im Rahmen der Einführung von Beifahrerairbags ist die Notwendigkeit entstanden, aus sicherheits- und versicherungstechnischen Gründen einen mit einer Person belegten Beifahrersitz zu erkennen. Beim Unfall und einem nicht belegten Beifahrersitz muss kein Insasse geschützt werden, so dass eine Entfaltung des Airbags vermieden werden sollte. Dies spart dann unnötige Reparaturkosten. Nun sollen sogenannte Smartbags verwendet werden, die person- und situationsadaptiv in ihrem Aufblasverhalten gestaltet werden sollen. Insbesondere sollen solche Fälle erkannt werden, die ein Aufblasen des Airbags zum Nachteil des Insassen vermeiden. Dies ist beispielsweise bei Kindern auf dem Beifahrersitz der Fall, oder wenn sich die Person zu nahe am Armaturenbrett befindet. Auch schwangere Personen stellen eine solche Gefahrengruppe dar.

Ziel der Erfindung ist es, eine schwangere Person zu erkennen, um diese dann optimal zu schützen.

Erfindungsgemäß wird dies dadurch erreicht, dass ein Sensor im Fahrzeugsitz derart gestaltet ist, dass er die Erkennung einer schwangeren Person ermöglicht. Dies wird vorteilhafter Weise durch einen piezoelektrischen Sensor erreicht, der eine Frequenzanalyse von auftretenden Frequenzen durch Atemvorgänge und Pulsschläge ermöglicht. Es sind jedoch auch andere Sensoren, die das Schwingungsverhalten aufnehmen können, verwendbar.

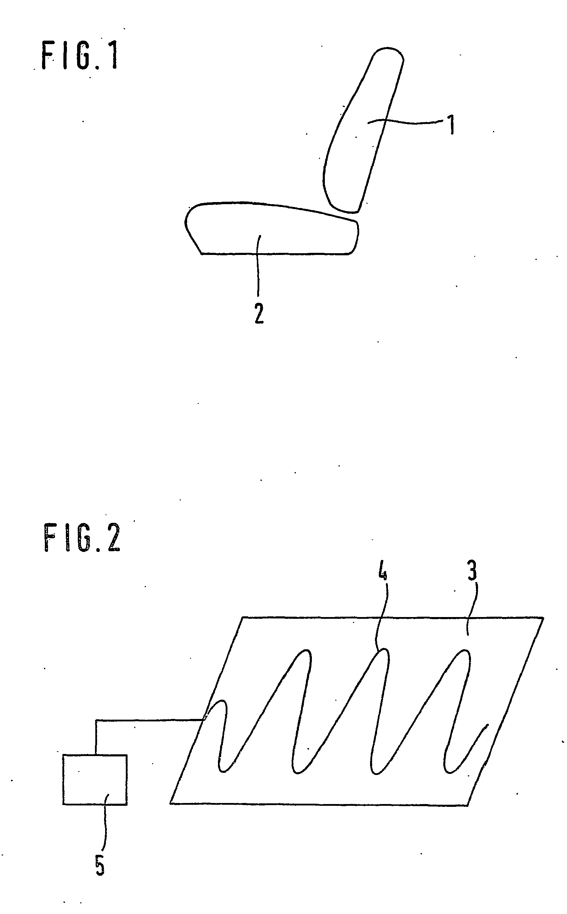

Figur 1 zeigt einen Fahrzeugsitz, der ein Sitzpolster 2 und ein Rückenpolster 1 aufweist. Der piezoelektrische Sensor kann sowohl im Sitzpolster 2, als auch in der Rückenlehne 1 eingebaut werden. Es ist weiterhin möglich, den Sensor auch gleichzeitig in beiden Teilen des Sitzes einzubauen. Dies ermöglicht eine Plausibilisierung des Ergebnisses.

Figur 2 zeigt schematisch den piezoelektrischen Sensor 4 als Kabel, der in einem Kunststoff 3 eingebaut ist. Der piezoelektrische Sensor 4 ist über eine Leitung mit einer Steuereinheit 5 verbunden. Die Steuereinheit 5 weist Mittel zur Auswertung des Signals vom piezoelektrischen Sensor 4 auf. Dabei können in der Steuereinheit 5 auch zunächst Signalaufbereitungsmittel wie Verstärker und Filter für das Signal vom piezoelektrischen Sensor 4 vorhanden sein. Alternativ zur Kabelstruktur können auch andere geometrische Formen als piezoelektrischer Sensor 4 verwendet werden. Es ist auch möglich, eine Mehrzahl von piezoelektrischen Sensoren zu verwenden. Diese liefern dann ihre Signale an die Steuereinheit 5. Die Steuereinheit 5 führt dann die Frequenzanalyse durch eine Integraltransformation des Signals von dem piezoelektrischen Sensor 4 durch. Als Integraltransformation bieten sich die Fourier-Transformation und die Wavelet-Transformation an. Beide sind geeignet, um bestimmte Vorgänge wie den Atemvorgang und Pulsschläge in den Frequenzbereichen zu identifizieren. Die Steuereinheit 5 wird das aufbereitete Signal, wobei die Aufbereitung auch bei dem Sensor 4 angeordnet sein kann, durch einen Analog-Digital-Wandler digitalisieren, um dann dieses digitale Signal mittels eines Prozessors zur Frequenzanalyse, also zur Fourier- oder Wavelet-Analyse zu verwenden. Die Abtastfrequenz ist hierbei entsprechend zu wählen.

Durch einen Algorithmus wird nun eine schwangere Person dahingehend erkannt, dass wenigstens zwei Pulsmessungen, aber nur eine Atemmessung vorhanden ist. Die Pulsmessung der schwangeren Frau ist hierbei durch eine Atemmessung moduliert, während bei der zweiten höherfrequenten Pulsmessung die Atmung fehlt. Hieraus kann der Schluss gezogen werden, dass es sich um ein ungeborenes Kind handelt.

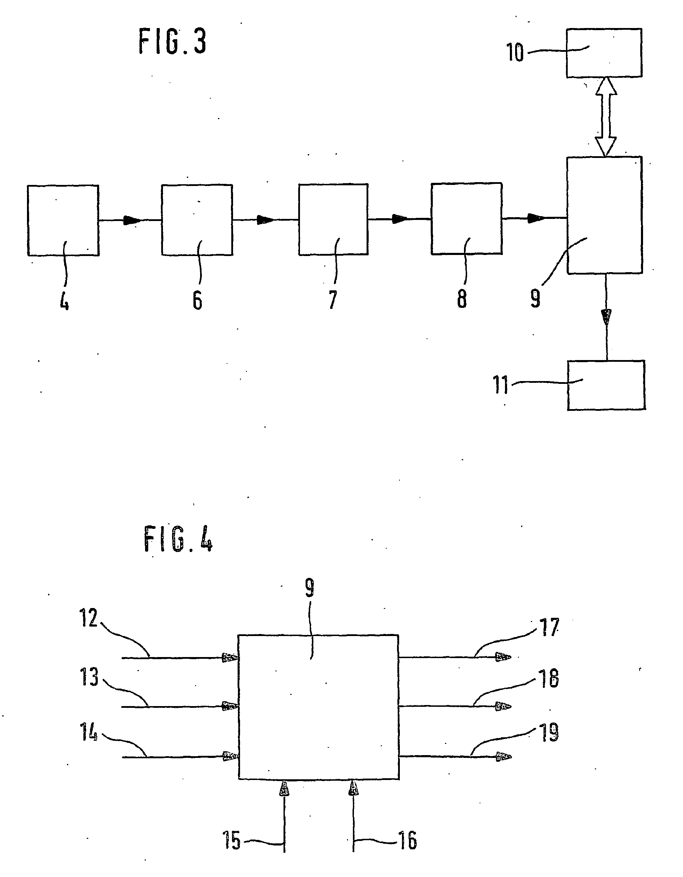

Figur 3 verdeutlicht dies mittels eines Blockdiagrammes. Ein Sensor 4 liefert ein Signal zu einer Signalaufbereitung 6, die hier ein Messverstärker ist. Das verstärkte Signal wird dann von einem Filter 7, beispielsweise einem Bandpassfilter, gefiltert. Das so gefilterte Signal wird von einem Analog-Digital-Wandler 8 digitalisiert, um dann von einem Prozessor 9 mittels eines Speichers 10 analysiert zu werden. Dafür wird, wie oben dargestellt, die Fourier- bzw. Wavelet-Analyse verwendet. Es sind jedoch auch andere Integraltransformationen möglich. Wird eine schwangere Frau durch den Prozessor 9 erkannt, dann werden die Rückhaltemittel 11 entsprechend angesteuert. Neben der Erkennung der schwangeren Frau kann der Prozessor 9 auch eine Insassenklassifizierung bezüglich des Gewichts und eine Bestimmung, ob der Sitz belegt ist, oder nicht, durchführen. Als Rückhaltemittel 11 werden Gurtstraffer, Airbags, Seitenairbags u.s.w. angesteuert.

Figur 4 zeigt, welche Signale in den Prozessor 9 eingeführt werden können, so dass der Prozessor 9 die entsprechenden Ausgangssignale liefert. In den Prozessor 9 werden die Sensorsignale 12, eine Geschwindigkeit 13, eine Drehzahl 14, Signale von einem Fahrzeug-Bus 15, die Temperatur 16, geliefert, so dass der Prozessor 9 daraus bestimmt, ob eine schwangere Person vorliegt 17, ob der Sitz belegt ist 18 und welche Gewichtsklasse bei einer Belegung vorliegt 19. Damit ist bei der Verwendung eines piezoelektrischen Sensors nicht nur die Bestimmung möglich, ob eine schwangere Person sich auf dem Sitz befindet, sondern auch ob sich eine Person auf dem Sitz befindet, und welche Gewichtsklasse zuordenbar ist. Alternativ zu einem piezoelektrischen Sensor sind auch andere Sensoren geeignet, die solche Schwingungen wie die Atemfrequenz und die Pulsfrequenz aufnehmen können.

## Patentansprüche

1. Steuereinheit mit einem Sensor (4) der in einem Fahrzeugsitz eingebautbar ist, **dadurch gekennzeichnet, dass** der Sensor (4) derart konfiguriert ist, dass ein Signal (12) von dem Sensor (4) die Identifikation einer schwangeren Person ermöglicht, dass die Steuereinheit (5) einen Prozessor (9) aufweist, der das Signal (12) mittels einer Integraltransformation derart analysiert, dass aus der Identifikation von einem Atemvorgang und wenigstens zwei Pulsfrequenzen die schwangere Person identifizierbar ist, dass die Steuereinheit (5) mit wenigstens einem Rückhaltemittel (11) verbindbar ist, wobei mittels der Steuereinheit in Abhängigkeit von der Identifikation einer schwangeren Person das wenigstens eine Rückhaltemittel (11) ansteuerbar ist.

2. Steuereinheit nach Anspruch 1, **dadurch gekennzeichnet, dass** der Prozessor (9) als Integraltransformation entweder die Fourier-Transformation oder die Wavelet-Transformatiön verwendet.

## Claims

1. Control unit comprising a sensor (4) which can be incorporated in a vehicle seat, **characterized in that** the sensor (4) is configured in such a way that a signal (12) from the sensor (4) permits the identification of a pregnant person, **in that** the control unit (5) has a processor (9) which analyses the signal (12) by means of an integral transformation in such a way that the pregnant person can be identified by identifying one breathing process and at least two pulse frequencies, **in that** the control unit (5) can be connected to at least one restraint means (11), it being possible to actuate the at least one restraint means (11) by means of the control unit as a function of the identification of a pregnant person.

2. Control unit according to Claim 1, **characterized in that** the processor (9) uses either the Fourier transformation or the wavelet transformation as the integral transformation.

## Revendications

1. Unité de commande comportant un capteur (4) susceptible d'être installé dans un siège de véhicule,
**caractérisée en ce que**
le capteur (4) est configuré pour qu'un signal (12) du capteur (4) permette la détection d'une personne enceinte,
- l'unité de commande (5) comporte un processeur (9) qui analyse le signal (12) à l'aide d'une transformation intégrale,
- à partir de l'identification d'un processus respiratoire et d'au moins une fréquence de pulsations, on détecte la personne enceinte,
- l'unité de commande (5) est reliée à au moins un moyen de retenue (11),
- à l'aide de l'unité de commande et en fonction de la détection d'une personne enceinte, on commande au moins un moyen de retenue (11).

2. Unité de commande selon la revendication 1,
**caractérisée en ce que**
le processeur (9) utilise comme transformation intégrale soit la transformation de Fourier, soit la transformation des ondelettes.
